(19) Europäisches Patentamt
European Patent Office
Office européen des brevets

(11) **EP 2 610 751 A1**

(12) **EUROPEAN PATENT APPLICATION**
published in accordance with Art. 153(4) EPC

(43) Date of publication:
**03.07.2013 Bulletin 2013/27**

(51) Int Cl.:
**G06F 11/30** *(2006.01)*    **G06F 11/34** *(2006.01)*

(21) Application number: **10856401.4**

(86) International application number:
**PCT/JP2010/064289**

(22) Date of filing: **24.08.2010**

(87) International publication number:
**WO 2012/025994 (01.03.2012 Gazette 2012/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited
Kawasaki-shi, Kanagawa 211-8588 (JP)**

(72) Inventor: **KIKUCHI, Wataru
Kawasaki-shi
Kanagawa 211-8588 (JP)**

(74) Representative: **HOFFMANN EITLE
Patent- und Rechtsanwälte
Arabellastrasse 4
81925 München (DE)**

(54) **SYSTEM CONTROL DEVICE, METHOD OF CONTROLLING LOG AND INFORMATION PROCESSING DEVICE**

(57)    When an error has occurred in one of a plurality of partitions and when an unused area is present in a log area, an in.formation processing device allocates the unused area to the log area of the partition in which the error has occurred and stores a log of the error that has occurred. When an error has occurred in one of the plurality of partitions, when an unused area is not present in a log area, and when a registration count registered in a log area associated with the partition in which the error has occurred exceeds an upper limit, the information processing device allocates, to the log area of the partition in which the error has occurred, the oldest entry in a log area that stores therein error logs the number of which is equal to or greater than an upper limit count that is previously set and stores the log of the error that has occurred.

FIG.2

**Description**

Technical Field

The embodiments discussed herein are directed to a system control device, a log control method, and an information processing device.

Background Art

In conventional large-scale servers, multiple partitions are created in the servers by dividing hardware into pieces, in each of which an Operating System (OS) can operate, and thus multiple Operating Systems can operate simultaneously. A single partition may sometimes be constituted by the minimum hardware in which an OS can operate or may sometimes be constituted, in accordance with the operation state, by multiple pieces of hardware.

If an error occurs in hardware that constitutes a partition, any area affected by the error is within the partition. In other words, the effect on a partition B of an error that has occurred in the hardware of a partition A is small. Because of this, a server manages an error log for each partition by using a system control unit that has system control firmware that manages error logs.

For example, in the system control unit in the server, log areas are provided, the number of which corresponds to the maximum number of partitions that can be defined in the server, and a log area is allocated to each partition. Then, if an error occurs in the server, the system control unit registers an error log in a log area that is associated with the partition in which the error has occurred. Furthermore, if the log area becomes full, the system control unit registers an error log by using a wrap process in which the oldest error log is overwritten.

In the above technology, the number of log areas provided is the same as the number of maximum partitions and an error log is registered for each partition. Furthermore, the technology is used for virtual machines (VMs). Specifically, the system control unit has a log area for each VM and registers an error log in a log area in the VM in which an error has occurred.

Furthermore, a server is disclosed that has multiple log storing units that store therein error logs and that records the error logs in free areas. For example, if an error has occurred, the server determines whether a free area is present in a log storing unit A in which an error log is to be registered. If a free area is present, the server registers a log of the error, which has occurred, in the log storing unit A. In contrast, if no free area is present, the server determines whether, from among the error logs stored in the log storing unit A, a log whose retention period has elapsed is present.

If no free area is present in the log storing unit A and a log whose retention period has elapsed is present, the server overwrites the log whose retention period has elapsed and registers a log of the error, which has occurred, in the log storing unit A. In contrast, if no free area is present in the log storing unit A and no log whose retention period has elapsed is present, the server creates a log storing unit B corresponding to another storing unit and registers a log of the error that has occurred.

Citation List

Patent Literature

Patent Literature 1: Japanese Laid-open Patent Publication No. 04-257035
Patent Literature 2: Japanese Laid-open Patent Publication No. 10-011330

Summary of invention

Technical Problem

However, with the conventional technology, there is a problem in that the areas that store therein error information are not used effectively.

Specifically, with the conventional technology, in a server in which five partition can be provided, even if Operating Systems only operate in three of the partitions, a log area corresponding to five partition areas is still reserved. Consequently, log areas corresponding to the two partition areas in each of which an OS does not operate are unused areas, and thus a limited resource is used wastefully.

Furthermore, if no free area is present in the log storing unit A, even if an old error log is overwritten or even if the log storing unit B that corresponds to another log storing unit is created, the other log storing unit is not used during the time period for which the old error log in the log storing unit A is overwritten. Specifically, an unused log area is present and thus a limited resource is used wastefully.

The present invention has been conceived in light of the circumstances described above, and an object thereof is to provide a system control device, a log control method, and an information processing device that can effectively use areas in which error information is stored.

Solution to Problem

According to an aspect of the embodiment of the invention, a system control device includes: an error log storing unit that stores, in log areas associated with a plurality of partitions obtained by allocating hardware that is divided into pieces in which an information processing function is exhibited, a log of an error that has occurred in any of the plurality of partitions; an upper limit count storing unit that stores therein an upper limit count of logs in each of the log areas associated with the plurality of partitions; a first storing unit that allocates an unused area to a log area associated with a partition in which the error has occurred ,when the error has occurred in one of the plurality of partitions and the unused area is present in the error log storing unit, and stores the log of the error in an allocated unused area; and a second storing unit that allocates an oldest entry in the log area that stores therein error logs the number of which is equal to or greater than the upper limit count that is stored in the upper limit count storing unit to a log area associated with the partition in which the error has occurred, when the error has occurred in one of the plurality of partitions, when an unused area is not present in the error log storing unit, and when a registration count, which is registered in a log area associated with the partition in which the error has occurred, exceeds the upper limit count, and stores the log of the error in an allocated oldest entry.

According to an aspect of the system control device, the log control method, and the information processing device disclosed in the present invention, an advantage is provided in that areas in which error information is stored can be used effectively.

Brief Description of Drawings

FIG. 1 is a block diagram illustrating the configuration of an information processing device according to a first embodiment.

FIG. 2 is a block diagram illustrating the configuration of a system control unit illustrated in FIG. 1.

FIG. 3 is a schematic diagram illustrating an example of information stored in a log management information DB.

FIG. 4 is a schematic diagram illustrating an example of information stored in a pool management information DB.

FIG. 5 is a schematic diagram illustrating errors stored in a first error storing unit.

FIG. 6 is a schematic diagram illustrating an example of leveling performed by allocating entries from a log area in which the available log registration count upper limit is exceeded.

FIG. 7 is a schematic diagram illustrating an example of leveling performed when a new partition is created.

FIG. 8 is a schematic diagram illustrating an example in which leveling is performed when an existing partition is deleted.

FIG. 9 is a flowchart illustrating the overall flow of an error log registration process performed by the information processing device.

FIG. 10 is a flowchart illustrating the flow of a pool usage process in the error log registration process.

FIG. 11 is a flowchart illustrating the flow of a leveling process in the error log registration process.

FIG. 12 is a schematic diagram illustrating an example of information stored in a log management information DB according to a second embodiment.

FIG. 13 is a schematic diagram illustrating the hardware configuration of a PID.

FIG. 14 is a schematic diagram illustrating an example of an available log registration count upper limit calculated on the basis of the number of parts constituting the PID.

FIG. 15 is a schematic diagram illustrating the hardware configuration of the PID and the score of the hardware.

FIG. 16 is a schematic diagram illustrating an example of the available log registration count upper limit that is calculated after the PID is converted to a score.

FIG. 17 is a flowchart illustrating the determining of an available log registration count upper limit when the minimum log reservation count is set.

Embodiments for Carrying Out the Invention

Preferred embodiments of a system control device, a log control method, and an information processing device disclosed in the present invention will be described in detail below with reference to the accompanying drawings. The present invention is not limited to these embodiments.

[a] First Embodiment

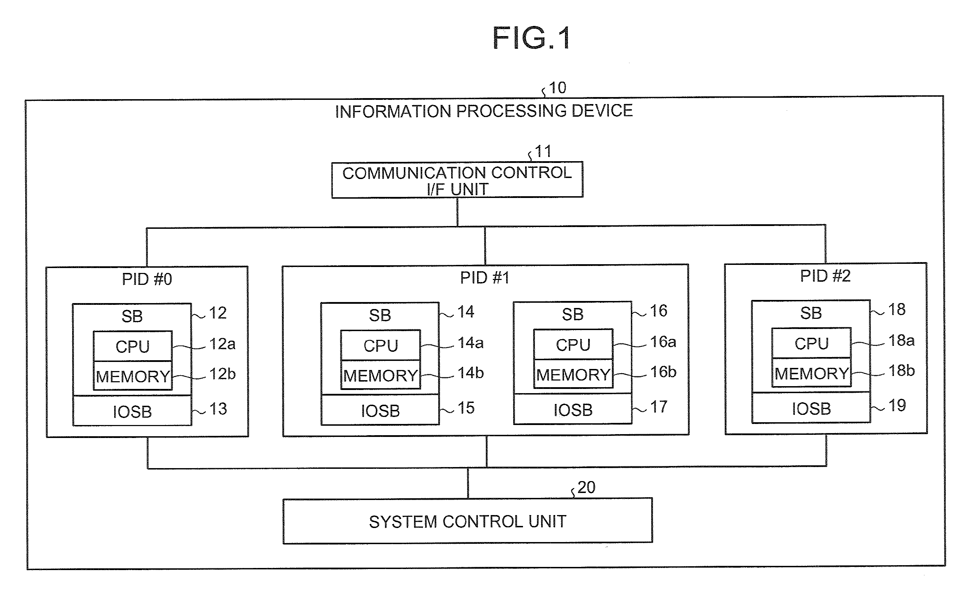

FIG. 1 is a block diagram illustrating the configuration of an information processing device according to a first embodiment. An information processing device 10 is a server, such as an application server that executes or provides an application, a Web server that provides a Web service, or a database server that stores therein data. Furthermore, in addition to the server mentioned above, the information processing device 10 may also be used in a personal computer.

[Configuration of an information processing device]

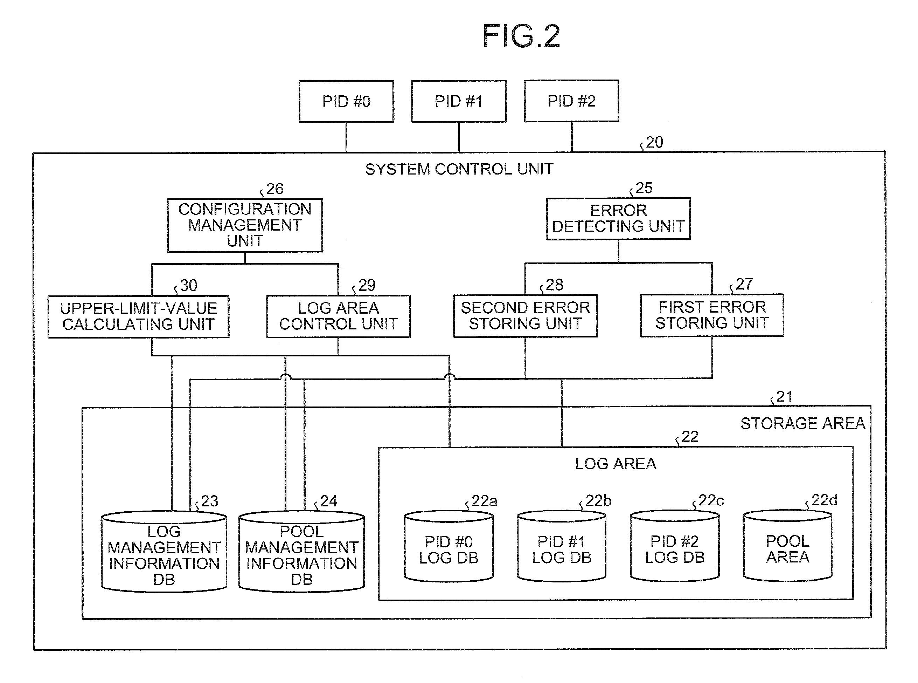

As illustrated in FIG. 1, the information processing device 10 includes a communication control I/F unit 11, a PID #0, a PID #1, a PID #2, and a system control unit 20. The communication control I/F unit 11 is a communication interface that controls communication with another device.
The PID #0, the PID #1, and the PID #2 are partitions obtained by allocating hardware that is divided into pieces in which an OS operates, i.e., in which an information processing function is exhibited. Specifically, three partitions are currently allocated to the information processing device 10. The number of partitions is increased/decreased by an administrator.
The PID #0 includes a system board (SB) 12, a central processing unit (CPU) 12a, a memory 12b, and an input/output system board (IOSB) 13. The PID #1 includes an SB 14, a CPU 14a, a memory 14b, and an IOSB 15. Furthermore, the PID #1 includes an SB 16, a CPU 16a, a memory 16b, and an IOSB 17. The PID #2 includes an SB 18, a CPU 18a, a memory 18b, and an IOSB 19. The hardware included in each PID is the same; therefore, only the PID #0 will be described.
The SB 12 is an electronic circuit constituting an electronic device and has mounted thereon the CPU 12a and the memory 12b. The CPU 12a is a processor that executes various kinds of control, such as value calculation, information processing, device control, and the like. The memory 12b is a storage device that stores therein data used by the CPU 12a for various processes. The CPU 12a and the memory 12b mounted on the SB 12 are only examples and are not limited thereto.
The IOSB 13 is connected to an input/output device via, for example, a small computer system interface (SCSI), a fibre channel (FC), an Ethernet (registered trademark), or the like and controls a process, such as data transfer.
The system control unit 20 is a control unit that manages, for example, an error log of an error that occurs in the PID #0, the PID #1, or the PID #2. The system control unit 20 will be specifically described with reference to FIG. 2.

[Configuration of the system control unit]

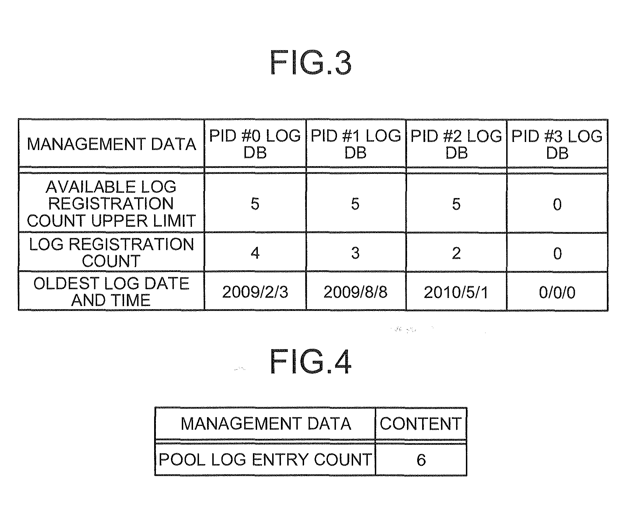

FIG. 2 is a block diagram illustrating the configuration of a system control unit illustrated in FIG. 1. As illustrated in FIG. 2, the system control unit 20 includes a storage area 21, an error detecting unit 25, a configuration management unit 26, a first error storing unit 27, a second error storing unit 28, a log area control unit 29, and an upper-limit-value calculating unit 30. The storage area 21 is a storing unit that stores therein, for example, an error log or management information. The storage area 21 includes a log area 22, a log management information DB 23, and a pool management information DB 24.
The log area 22 stores, in log areas associated with multiple partitions obtained by allocating hardware that is divided into pieces in which an information processing function is exhibited, a log of an error that has occurred in any of the multiple partitions. The log area 22 has a log area for each partition included in the information processing device 10. In the example illustrated in FIG. 1, the log area 22 includes a PID #0 log DB 22a, a PID #1 log DB 22b, a PID #2 log DB 22c, and a pool area 22d. The areas included in the log area 22 dynamically vary in accordance with any increase/ decrease in the number of partitions implemented in the information processing device 10 by creating or deleting a partition performed by the log area control unit 29.
The PID #0 log DB 22a is a storing unit that stores therein, as an entry, an error log of an error that has occurred in the PID #0. For example, the PID #0 log DB 22a stores therein an error log of an error that has occurred in the SB 12 or the IOSB 13. The PID #1 log DB 22b is a storing unit that stores therein, as an entry, an error log of an error that has occurred in the PID #1. For example, the PID #1 log DB 22b stores therein an error log of an error that has occurred in the SB 14, the IOSB 15, the SB 16, or the IOSB 17. The PID #2 log DB 22c is a storing unit that stores therein, as an entry, an error log of an error that has occurred in the PID #2. For example, the PID #2 log DB 22c stores therein an error log of an error that has occurred in the SB 18 or the IOSB 19. The pool area 22d is a shared log area that can be allocated to each PID.
The log management information DB 23 stores therein the upper limit of the number of logs stored in each of the log areas that are associated with the multiple partitions operating in the information processing device 10. In the embodiment, the log management information DB 23 stores therein information for each partition having the maximum capacity that can operates in the information processing device 10. FIG. 3 is a schematic diagram illustrating an example of information stored in a log management information DB. As illustrated in FIG. 3, the log management information DB 23 stores therein "the available log registration count upper limit, the log registration count, and the oldest log date and time", which are associated with each of "the PID #0 log DB, the PID #1 log DB, the PID #2 log DB, and a PID #3 log DB".

The "PID #0 log DB" is associated with the PID #0 that operates in the information processing device 10, the "PID #1 log DB" is associated with the PID #1 that operates in the information processing device 10, and the "PID #2 log DB" is associated with the PID #2 that operates in the information processing device 10. Furthermore, the "PID #3 log DB" is associated with a PID that does not currently operate in the information processing device 10 but can operate therein.

The "available log registration count upper limit" is an entry count of error logs to be allocated to PIDs after a pool area, i.e., a shared log area, that can be allocated to each PID is fully used. The "log registration count" is the number of entries that are currently registered. From among the currently registered entries, "the oldest log date and time" is information indicating the date and time of the oldest entry.

Specifically, in the example illustrated in FIG. 3, in the PID #0 log DB 22a that is used for the PID #0, the "available log registration count upper limit of 5" is allocated and "4 entries" including "the oldest log date and time of 2009/2/3" are currently registered. Furthermore, in the PID #1 log DB 22b that is used for the PID #1, the "available log registration count upper limit of 5" is allocated and "3 entries" including "the oldest log date and time of 2009/8/8" are currently registered.

In the PID #2 log DB 22c for the PID #2, the "available log registration count upper limit of 5" is allocated and "2 entries" including "the oldest log date and time of 2010/5/1" are currently registered. Furthermore, no information is registered in the "PID #3 log DB" associated with a PID #3, which is not currently operating.

A description will be given here by referring back to FIG. 2. The pool management information DB 24 stores therein an entry count in an area that is not used as a log area and can be used as a shared log area that can be allocated to each PID. FIG. 4 is a schematic diagram illustrating an example of information stored in a pool management information DB. As illustrated in FIG. 4, the pool management information DB 24 stores therein "6" as the "pool log entry count", which indicates a shared log area. Specifically, the pool management information DB 24 stores therein information indicating that the number of entries that can be allocated to each PID log DB is "6".

The error detecting unit 25 detects an error that has occurred in a PID in the information processing device 10 and sends a registration request for an error log of the detected error. For example, if an error occurs in the SB 16 in the PID #1, the error detecting unit 25 creates, as information on the error, an error log that specifies an error status indicating, for example, the place and the type of error that has occurred. Then, the error detecting unit 25 outputs, to the first error storing unit 27, a registration request that requests the created error log be registered in the PID #1 log DB 22b.

The configuration management unit 26 manages the overall configuration of the partitions in the information processing device 10. For example, if the configuration management unit 26 receives an instruction to create the PID #3, which is a new partition, from an administrator, the configuration management unit 26 allocates hardware in accordance with the instruction, creates the PID #3 in the information processing device 10, and notifies the log area control unit 29 that the creation has been completed. Furthermore, if the configuration management unit 26 receives an instruction to delete the PID #1, which is an existing partition, from the administrator, the configuration management unit 26 releases the hardware in accordance with the instruction, deletes the PID #1, and notifies the log area control unit 29 that the deletion has been completed

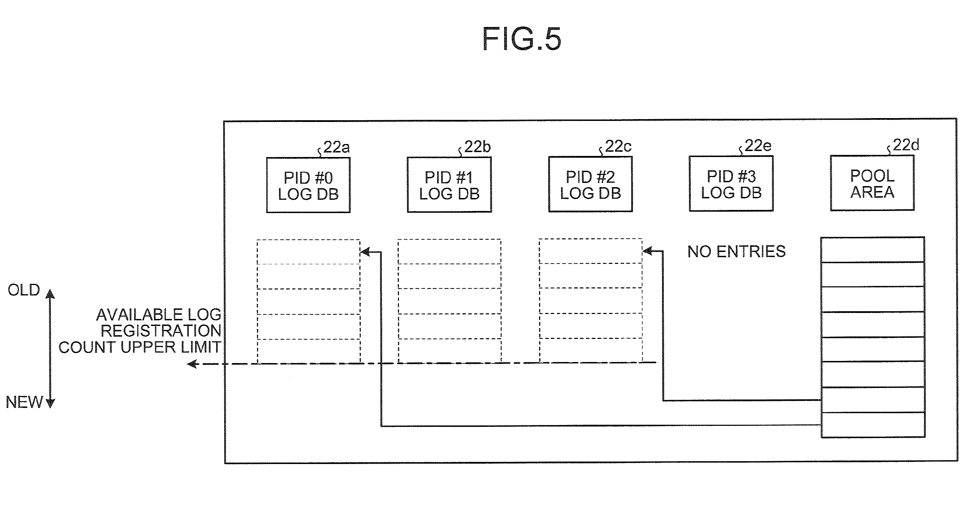

If an unused area is present when an error occurs in any of the multiple partitions, the first error storing unit 27 allocates the unused area to the log area associated with the partition in which an error has occurred and stores the error log of the error that has occurred in an allocated unused area. FIG. 5 is a schematic diagram illustrating errors stored in a first error storing unit. For example, as illustrated in FIG. 5, if the first error storing unit 27 registers the error log in the PID #0 log DB 22a when an available area is present in the pool area 22d, the first error storing unit 27 allocates an entry to the PID #0 log DB 22a from the pool area 22d and registers an error log. Furthermore, if the first error storing unit 27 registers the error log in the PID #2 log DB 22c when an available area is present in the pool area 22d, the first error storing unit 27 allocates an entry to the PID #2 log DB 22c in the pool area 22d and registers an error log.

For example, if the first error storing unit 27 receives, from the error detecting unit 25, a registration request for an error log registered in the PID #1 log DB 22b, the first error storing unit 27 refers to the pool management information DB 24 and determines whether the "pool log entry count" is equal to or greater than "1". If the "pool log entry count" is equal to or greater than "1", the first error storing unit 27 acquires one entry from the pool area 22d, allocates the entry to the PID #1 log DB 22b, and registers the error log in the allocated entry. Then, the first error storing unit 27 increments the "log registration count" that is associated with the "PID #1 log DB" in the log management information DB 23 and decrements the "pool log entry count" in the pool management information DB 24. Furthermore, if the "pool log entry count" is "0", the first error storing unit 27 transfers, to the second error storing unit 28, the registration request for the error log received from the error detecting unit 25.

Furthermore, if an available area is present in the pool area 22d, the first error storing unit 27 allocates an entry of the pool area 22d and registers the error log regardless of whether the "available log registration count upper limit" is exceeded in each PID log DB. For example, it is assumed that the "log registration count" in the PID #0 log DB 22a is "7" and exceeds the "available log registration count upper limit of 5" and it is assumed that the "pool log entry count" is "3". In such a case, because an available area is present in the pool area 22d even if an error occurs in the PID #0, the first error storing unit 27 allocates a new entry in the PID #0 log DB 22a from the pool area 22d and registers an error log.

If an unused area is present in the log area 22 when an error occurs in the multiple partitions, the second error storing unit 28 refers to the log management information DB 23 and determines whether the "log registration count" in the log DB to be registered exceeds the "available log registration count upper limit". If the "log registration count" in the log DB to be registered exceeds the "available log registration count upper limit", the second error storing unit 28 registers an error log by using a wrap process in which the oldest entry from among the entries in the log DB to be registered is overwritten.

Furthermore, if the "available log registration count upper limit" is not exceeded, the second error storing unit 28 specifies a log DB that is other than the log DB to be registered and that stores therein error logs the number of which exceeds the upper limit to be stored in the log management information DB 23. Then, the second error storing unit 28 allocates the oldest entry in the specified log DB to the log area associated with the partition in which an error has occurred and then stores the log of the error that has occurred in an allocated oldest entry. Specifically, if the second error storing unit 28 receives a registration request for an error log when no available area is present in the pool area 22d, the second error storing unit 28 performs leveling of the entry counts allocated to each PID log DB when an available area is present in the pool area 22d. In other words, the second error storing unit 28 performs leveling on the log areas.

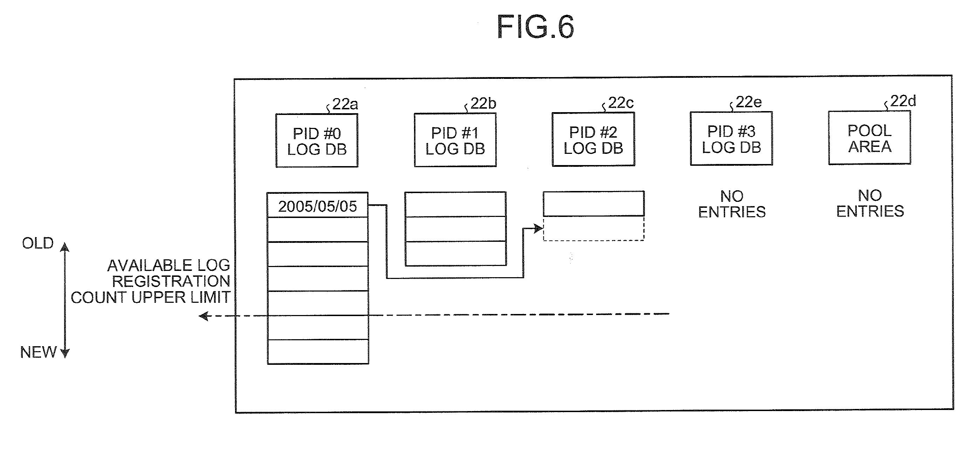

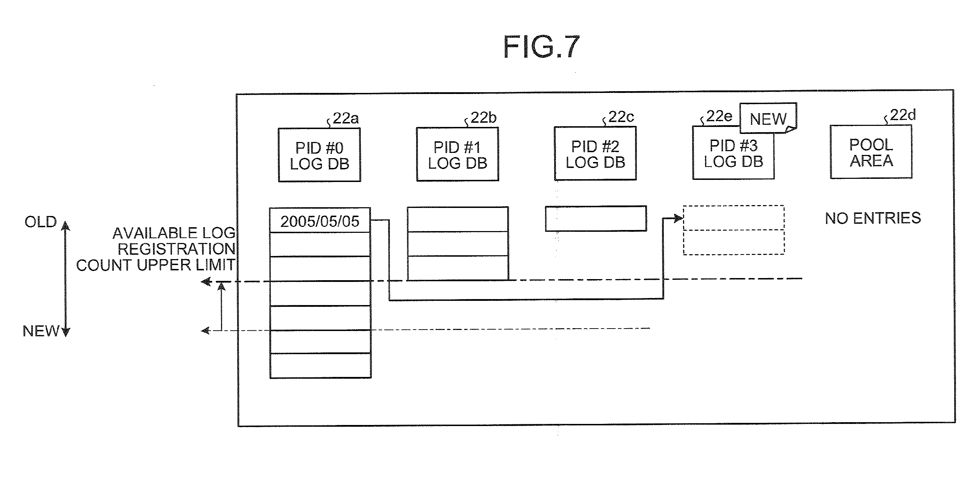

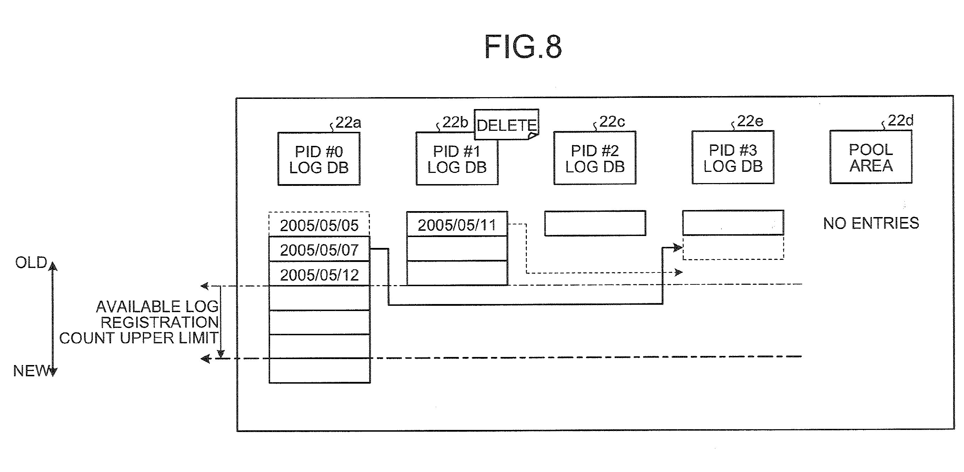

In the following, a specific example of the leveling will be described with reference to FIGS. 6 to 8. FIG. 6 is a schematic diagram illustrating an example of leveling performed by allocating entries from a log area in which the available log registration count upper limit is exceeded. FIG. 7 is a schematic diagram illustrating an example of leveling performed when a new partition is created. FIG. 8 is a schematic diagram illustrating an example in which leveling is performed when an existing partition is deleted.

For example, if the second error storing unit 28 receives, from the first error storing unit 27, a registration request for an error log registered in the PID #2 log DB 22c, the second error storing unit 28 specifies a DB in which the "log registration count" in the log management information DB 23 exceeds the "available log registration count upper limit". In this example, it is assumed that the second error storing unit 28 specifies that the "log registration count" in the PID #0 log DB 22a exceeds the "available log registration count upper limit". Then, as illustrated in FIG. 6, from among the entries in the specified PID #0 log DB 22a, the second error storing unit 28 allocates the oldest entry to the PID #2 log DB 22c and registers the requested error log in the allocated entry. Furthermore, the second error storing unit 28 decrements the "log registration count" of the PID #0 log DB 22a that is stored in the log management information DB 23 and updates "the oldest log date and time". Furthermore, the second error storing unit 28 increments the "log registration count" of the PID #2 log DB 22c that is stored in the log management information DB 23.

In the following, a description will be given of an example in which the new PID #3 is created in the information processing device 10 from the state illustrated in FIG. 6 and an error occurs in the PID #3. In this example, a PID #3 log DB 22e is created in the log area by the log area control unit 29, which will be described later, and the "available log registration count upper limit" in each DB in the log management information DB 23 is updated by the upper-limit-value calculating unit 30. For example, as illustrated in FIG. 7, if the PID #3 log DB 22e is created as a new log DB, an "available log registration count upper limit" allocated to each DB is updated and reduced.

In this state, it is assumed that an error log needs to be registered in the PID #3 log DB 22e used for the PID #3 that is newly created. In this example, as illustrated in FIG. 7, the second error storing unit 28 specifies the PID #0 log DB 22a as the DB in which the "log registration count" in the log management information DB 23 exceeds the "available log registration count upper limit". Then, as illustrated in FIG. 7, from among the entries in the specified PID #0 log DB 22a, the second error storing unit 28 allocates the entry of "2005/05/05", which is the oldest entry, to the PID #3 log DB 22e and registers the requested error log in the allocated entry. Furthermore, the second error storing unit 28 decrements the "log registration count" in the PID #0 log DB 22a in the log management information DB 23 and updates "the oldest log date and time". Furthermore, the second error storing unit 28 increments the "log registration counts" in the PID #3 log DB 22e in the log management information DB 23.

In the following, a description will be given of an example in which the PID #1 in the information processing device 10 is deleted from the state illustrated in FIG. 7 and the entry that is used by the PID #1 is released. In this example, the PID #1 log DB 22b in the log area is deleted by the log area control unit 29, which will be described later, and the "available log registration count upper limit" in each DB in the log management information DB 23 is updated by the upper-limit-value calculating unit 30. For example, as illustrated in FIG. 8, if the PID #1 log DB 22b is deleted, the "available log registration count upper limit" allocated to each DB is updated and increased.

In this state, it is assumed that an error log needs to be registered in the PID #3 log DB 22e that is used for the PID #3. In such a case, as illustrated in FIG. 8, the second error storing unit 28 specifies the PID #0 log DB 22a as the DB in which the "log registration count" in the log management information DB 23 exceeds the "available log registration count upper limit". Then, as illustrated in FIG. 8, the second error storing unit 28 refers to the log management information DB 23 and determines which entry, i.e., the oldest entry "2005/05/07" in the specified PID #0 log DB 22a or the oldest entry "2005/05/11" in the deleted PID #1 log DB 22b, is the oldest. In this example, because the oldest entry in the PID #0 log DB 22a is older, the second error storing unit 28 allocates the oldest entry "2005/05/07" in the PID #0 log DB 22a to the PID #3 log DB 22e and registers the requested error log in the allocated entry. Furthermore, the second error storing unit 28 decrements the "log registration count" in the PID #0 log DB 22a in the log management information DB 23 and updates "the oldest log date and time". Furthermore, the second error storing unit 28 increments the "log registration count" in the PID #3 log DB 22e in the log management information DB 23.

In the following, a description will be given, with reference to FIG. 8, of a case in which an error log needs to be registered in the PID #3 log DB 22e that is used for the PID #3. The second error storing unit 28 determines whether a DB in which the "log registration count" in the log management information DB 23 exceeds the "available log registration count upper limit" is present. If the "log registration count" in the PID #0 log DB 22a exceeds the "available log registration count upper limit", the second error storing unit 28 compares, similarly to the above example, the oldest entries. Specifically, the second error storing unit 28 determines which entry, i.e., the oldest entry "2005/05/12" in the specified PID #0 log DB 22a or the oldest

entry "2005/05/11" in the deleted PID #1 log DB 22b, is old. In this example, because the oldest entry in the PID #1 log DB 22b is older, the second error storing unit 28 allocates the entry "2005/05/11" in the PID #1 log DB 22b to the PID #3 log DB 22e and registers the requested error log in the allocated entry.

Furthermore, similarly to the example described above, the second error storing unit 28 updates each piece of the information stored in the log management information DB 23. Specifically, the second error storing unit 28 decrements the "log registration count" in the PID #1 log DB 22b and updates "the oldest log date and time". Furthermore, the second error storing unit 28 increments the "log registration count" in the PID #3 log DB 22e in the log management information DB 23.

In contrast, if the second error storing unit 28 determines that no DB is present in which the "log registration count" in the log management information DB 23 exceeds the "available log registration count upper limit", the second error storing unit 28 allocates the oldest entry "2005/05/11" in the deleted PID #1 log DB 22b to the PID #3 log DB 22e. Then, the second error storing unit 28 registers the requested error log in the allocated entry.

A description will be given here by referring back to FIG. 2. The log area control unit 29 creates a log DB for a PID in the log area 22 and deletes the log DB of the deleted PID. For example, if the log area control unit 29 receives, from the configuration management unit 26, a notification indicating that the PID #3 is newly created in the information processing device 10, the log area control unit 29 creates, in the log area 22, the PID #3 log DB 22e, which is the log DB of the PID #3, and sends a creation notification to the upper-limit-value calculating unit 30. Furthermore, if the log area control unit 29 receives, from the configuration management unit 26, a notification indicating that the PID #1 operating the information processing device 10 is deleted, the log area control unit 29 deletes, from the log area 22, the PID #1 log DB 22a, which is the log DB of the PID #1, and sends a deletion notification to the upper-limit-value calculating unit 30.

The upper-limit-value calculating unit 30 calculates an "available log registration count upper limit" for each log DB that is stored in the log management information DB 23 and stores it. Specifically, if a new PID is created or a PID is deleted, the upper-limit-value calculating unit 30 calculates an "available log registration count upper limit" by using Equation (1) and then stores it in the log management information DB 23. For example, it is assumed that three available PIDs are present in the information processing device and 30 entries can be registered in the entire log area. In such a case, the upper-limit-value calculating unit 30 calculates the "available log registration count upper limit "(10) by dividing the "entire log area entry count" (30) by the "available partition count" (3). Then, the upper-limit-value calculating unit 30 stores, in the log management information DB 23, each "available log registration count upper limit" for three PIDs, i.e., "10".

$$\text{available log registration count upper limit} = \frac{\text{entire log area entry count}}{\text{available partition count (configuration count)}}$$

$$(1)$$

For example, if the upper-limit-value calculating unit 30 receives, from the log area control unit 29, a notification indicating that the PID #3 is newly created, the upper-limit-value calculating unit 30 calculates the "available log registration count upper limit" for each PID that is currently in operation by using Equation (1). Furthermore, if the upper-limit-value calculating unit 30 receives, from the log area control unit 29, a notification indicating that the PID #1 is deleted, the upper-limit-value calculating unit 30 calculates an "available log registration count upper limit" for each PID that currently operates by using Equation (1).

[Flow of a process]

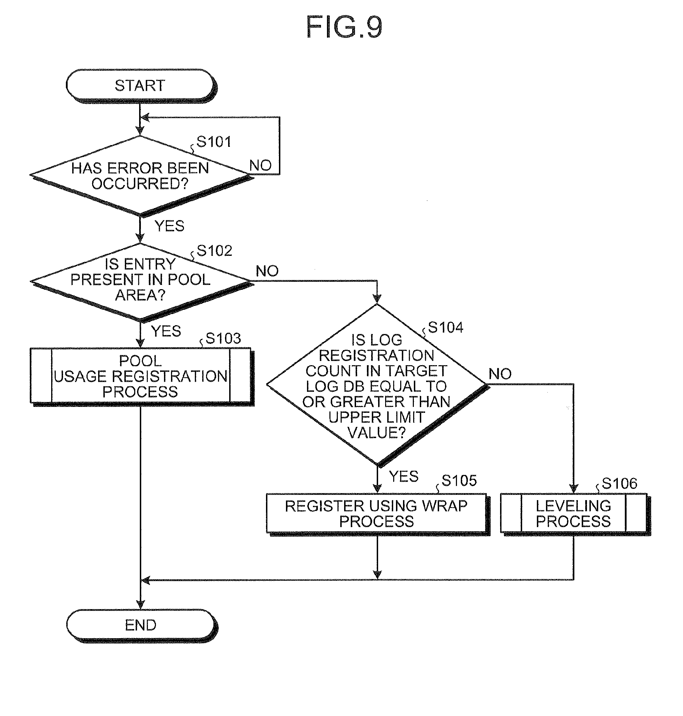

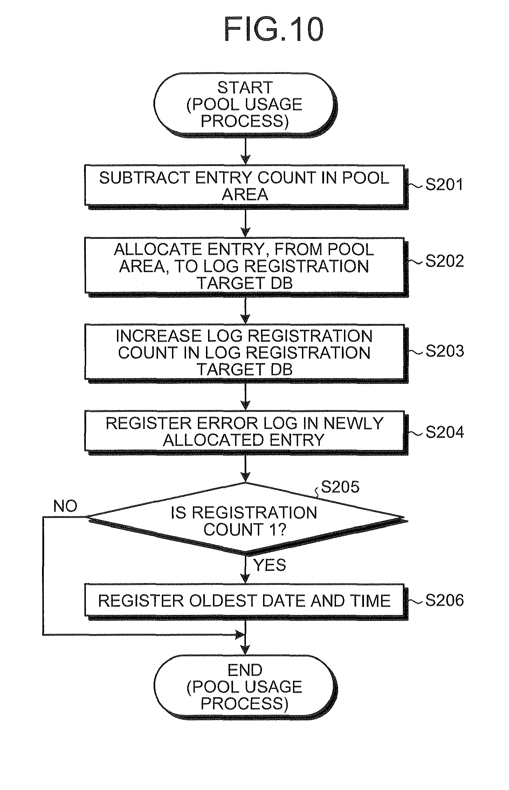

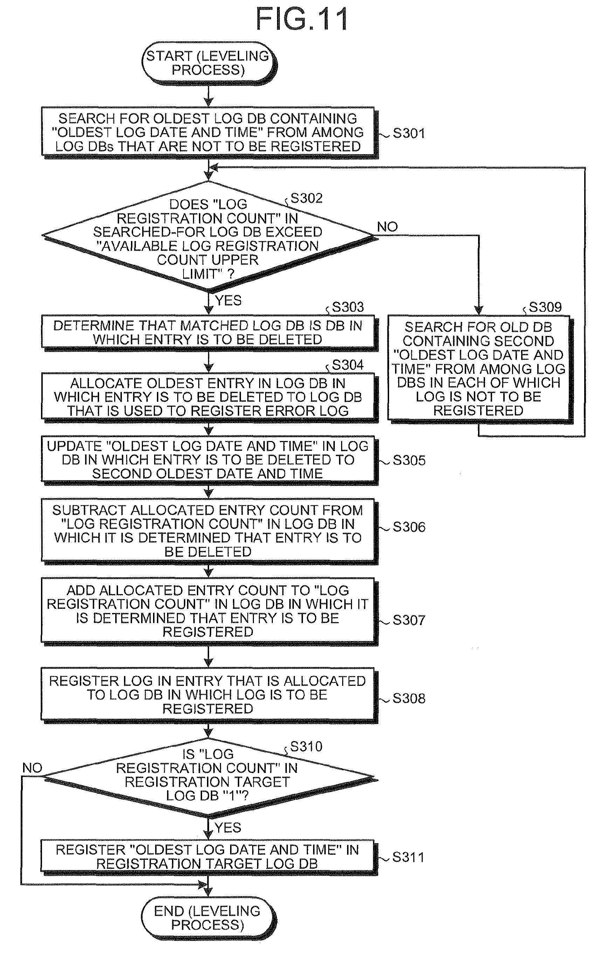

In the following, the flow of an error log registration process performed by the information processing device 10 will be described with reference to FIGS. 9 to 11. FIG. 9 is a flowchart illustrating the overall flow of an error log registration process performed by the information processing device. FIG. 10 is a flowchart illustrating the flow of a pool usage process in the error log registration process. FIG. 11 is a flowchart illustrating the flow of a leveling process in the error log registration process.

(Overall flow of the error log registration process)

As illustrated in FIG. 9, if the error detecting unit 25 in the information processing device 10 detects an error (Yes at Step S101), the first error storing unit 27 determines whether a free entry is present in the pool area 22d (Step S102).

If a free entry is present in the pool area 22d (Yes at Step S102), the first error storing unit 27 executes a pool usage process (Step S103). In contrast, If the first error storing unit 27 determines that no free entry is present in the pool area 22d (No at Step S102), the second error storing unit 28 determines whether the log registration count in the log DB in which the error log is to be registered exceeds the available log registration count upper limit (Step S104).

If the log registration count in the log DB in which the error log is to be registered exceeds the available log registration count upper limit (Yes at Step S104), the second error storing unit 28 registers a new error log by using a wrap process (Step S105). In contrast, if the log registration count in the log DB in which the error log is to be registered is less than the available log registration count upper limit (No Step S104), the second error storing unit 28 executes a leveling process (Step S106).

(Flow of a pool usage process)

In the following, the pool usage process executed at Step S103 illustrated in FIG. 9 will be described. As illustrated in FIG. 10, the first error storing unit 27 subtracts an entry count from the entry count in a pool information management DB 24 (Step S201). Then, the first error storing unit 27 allocates an entry, from the pool area 22d, to the log DB in which an error log is to be registered (Step S202).

Then, the first error storing unit 27 increments, at the log management information DB 23, the "log registration count" in the log DB in which the error log is to be registered by one (Step S203). Thereafter, the first error storing unit 27 registers a new error log in the new entry that is allocated from the pool area 22d (Step S204).

Subsequently, the first error storing unit 27 refers to the log management information DB 23 and determines whether the "log registration count" in the log DB in which the new error log is registered is "1" (Step S205). If the "log registration count" is "1" (Yes at Step S205), the first error storing unit 27 registers the date and time of the registered error log in "the oldest log date and time" in the log management information DB 23 (Step S206). In contrast, if the "log registration count" is not "1" (No at Step S205), the first error storing unit 27 ends the process.

(Flow of the leveling process)

In the following, a description will be given of the leveling process performed at Step S106 illustrated in FIG. 9. As illustrated in FIG. 11, the second error storing unit 28 refers to the log management information DB 23 and executes the process at Step S301. Specifically, the second error storing unit 28 searches for the oldest log DB containing "the oldest log date and time" from among the log DBs that are not to be registered.

Then, the second error storing unit 28 determines whether the "log registration count" in the searched-for log DB exceeds the "available log registration count upper limit" (Step S302). If the "log registration count" in the searched-for log DB exceeds the "available log registration count upper limit" (Yes Step S302), the second error storing unit 28 determines that the matched log DB is the DB in which an entry is to be deleted (Step S303).

Subsequently, the second error storing unit 28 allocates the oldest entry in the log DB in which it is determined that the entry is to be deleted to the log DB that is used to register a new error log (Step S304). Then, in the log management information DB 23, the second error storing unit 28 updates "the oldest log date and time" in the log DB in which it is determined that an entry is determined to be deleted to the second oldest date and time (Step S305).

Furthermore, in the log management information DB 23, the second error storing unit 28 subtracts the allocated entry count from the "log registration count" in the log DB in which it is determined that an entry is to be deleted (Step S306).

Thereafter, in the log management information DB 23, the second error storing unit 28 adds the allocated entry count to the "log registration count" in the registration target log DB (Step S307). Then, the second error storing unit 28 registers an error log of a new error in the entry that is allocated to the log DB in which the error log is to be registered (Step S308) .

Subsequently, the second error storing unit 28 refers to the log management information DB 23 and determines whether the "log registration count" in the log DB in which an error log is to be registered is "1" (Step S310). If the "log registration count" is "1" (Yes at Step S310), the second error storing unit 28 registers the date and time of the registered error log in "the oldest log date and time" in the log management information DB 23 (Step S311). In contrast, if the "log registration count" is not "1" (No at Step S310), the second error storing unit 28 ends the process.

If, at Step S302, the "log registration count" in the searched-for log DB does not exceed the "available log registration count upper limit" (No at Step S302), the second error storing unit 28 executes the process at Step S309 and then the process at Step S302 and the subsequent processes. Specifically, from among the log DBs in each of which a log is not to be registered, the second error storing unit 28 searches for a DB containing the second "oldest log date and time" and executes the process at Step S302 and the subsequent processes.

[Advantage of the first embodiment]

According to the first embodiment, a log area is arranged for each configuration that is obtained by dividing hardware into pieces and the area size of a log can be dynamically changed for each configuration in accordance with the number of configurations. Furthermore, if the configuration of a PID is changed and thus the area size of the log for each configuration is increased/decreased, leveling can be gradually performed between the configurations by moving a registered log when a log is registered. Consequently, an error log can be registered by allocating a needed area to a needed position and thus the leveling can be performed such that each error log in a PID can be registered; therefore, areas in which error information is stored can be used effectively.

Furthermore, according to the first embodiment, in firmware in which resources are limited, a log storage area can be efficiently used without waste. Log areas can be allocated in accordance with any dynamic change in the configuration of the partition. Furthermore, the partition logs are not deleted immediately after the deletion and are gradually deleted when a log is registered in another partition; therefore, it is possible to refer to the partition logs until they are deleted.

[b] Second Embodiment]

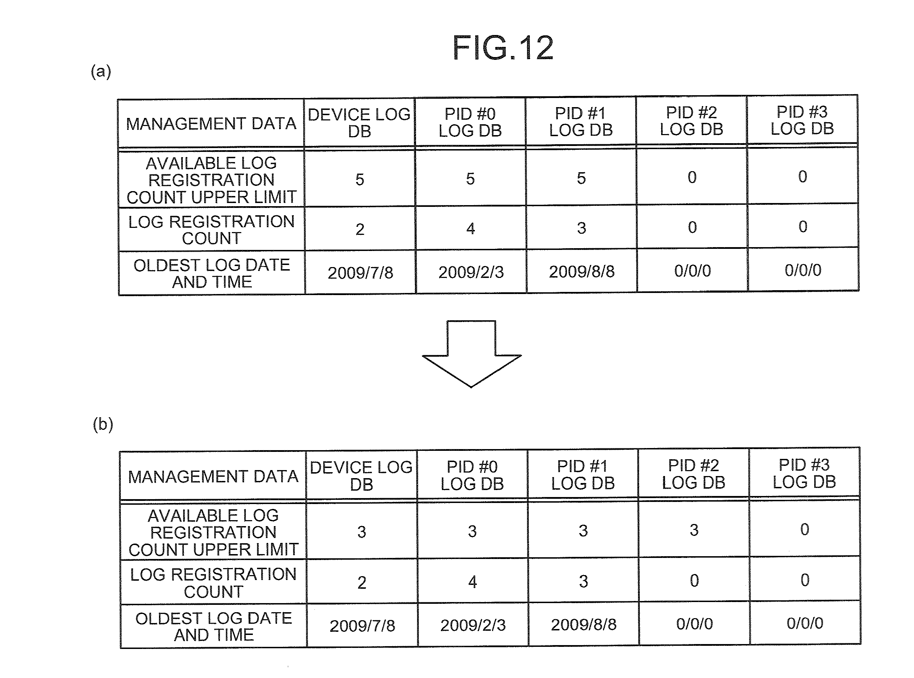

In the first embodiment, a description has been given of a case in which a log area is arranged for each PID; however, the embodiment is not limited thereto. For example, it is possible to register an error log by arranging a log DB for an "error within a PID" and a log DB for an "error affecting the entire information processing device". Specifically, the information processing device 10 can manage an error log by arranging, in the log area 22, both log DBs for PIDs and a log DB for the entire device. FIG. 12 is a schematic diagram illustrating an example of information stored in a log management information DB according to a second embodiment.

For example, as illustrated in (a) of FIG. 12, the log management information DB 23 stores therein "the available log registration count upper limit, the log registration count, and the oldest log date and time" by associating them with each of "the device log DB, the PID #0 log DB, the PID #1 log DB, the PID #2 log DB, and the PID #3 log DB". In the example illustrated in (a) of FIG. 12, the PID #1 and the PID #2 are in operation. The "available log registration count upper limit of 5" is allocated to each of "the device log DB, the PID #0 log DB, the PID #1 log DB, and the PID #2 log DB". Furthermore, in the "device log DB", two entries are currently registered and the oldest entry is "2009/7/8". In the "PID #0 log DB", four entries are currently registered and the oldest entry is "2009/2/3". In the "PID #1 log DB", three entries are currently registered and the oldest entry is "2009/8/8".

In this state, if the PID #2 is newly created, the upper-limit-value calculating unit 30 calculates, using Equation (2) illustrated below, the "available log registration count upper limit" for each DB and stores the calculation result in the log management information DB 23.

$$\text{available log registration count upper limit} = \frac{\text{entire log area entry count}}{\text{available partition count (configuration count)} + 1 \, (\text{device log area})}$$

$$(2)$$

Specifically, the upper-limit-value calculating unit 30 calculates the "available log registration count upper limit (3)", discarding any remainder, by dividing the "entire log area entry count (15)" by the sum of the "available partition count (3)" and the "device log (1)". Then, as illustrated in (b) of FIG. 12, the upper-limit-value calculating unit 30 stores, in the log management information DB 23, the "available log registration count upper limit" for each of the three PIDs and for the device log DB as "3".

[c] Third Embodiment

The disclosed information processing device may also calculate an "available log registration count upper limit" by using the number of pieces of hardware (component count) that constitutes a PID. Specifically, by substituting the hardware count of each PID into Equation (3), the information processing device can calculate the "available log registration count upper limit" for each PID.

$$\text{available log registration count upper limit} = \text{entire log area entry count} \times \frac{\text{target partition component count}}{\text{total components count of all partitions}}$$

$$(3)$$

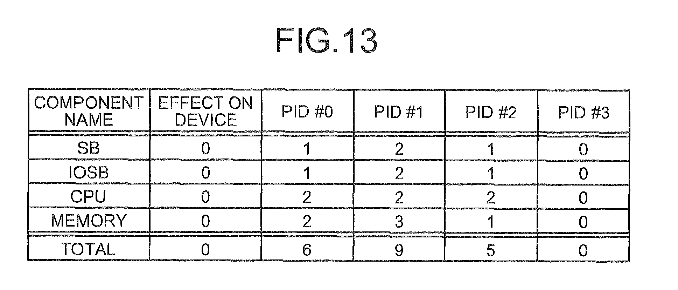

In the following, a description will be given of a case in which an "available log registration count upper limit" is calculated for each PID if each PID has the hardware configuration illustrated in FIG. 13. FIG. 13 is a schematic diagram illustrating the hardware configuration of a PID. As illustrated in FIG. 13, no hardware that affects a device is present and the PID #0 is constituted by one SB, one IOSB, two CPUs, and two memories. Furthermore, the PID #1 is constituted by two SBs, two IOSBs, two CPUs, and three memories. The PID #2 is constituted by one SB, one IOSB, two CPUs, and one memory. The PID #3 has no SB, no IOSB, no CPU, and no memory, i.e., the PID #3 has not been configured. Furthermore, 15 entries can be registered in the maximum log area.

In this state, the upper-limit-value calculating unit 30 calculates the "available log registration count upper limit as 0" for the device log DB. Furthermore, for the PID #0 log DB 22a, the upper-limit-value calculating unit 30 calculates, i.e., by using Equation (3), the "available log registration count upper limit" as "4.50" by dividing the product of the "entire log area entry count (15)" and the "PID #0 component count (6)" by the "total components count of all PID (20)".

Furthermore, for the PID #1 log DB 22b, the upper-limit-value calculating unit 30 calculates, i.e., by using Equation (3), the "available log registration count upper limit" as "6.75" by dividing the product of the "entire log area entry count (15)" and the "PID #1 component count (9)" by the " total components count of all PID (20)". Furthermore, for the PID #2 log DB 22c, the upper-limit-value calculating unit 30 calculates the "available log registration count upper limit" as "3.75" by dividing the product of the "entire log area entry count (15)" and the "PID #2 component count (5)" by the "total components count of all PID (20)".

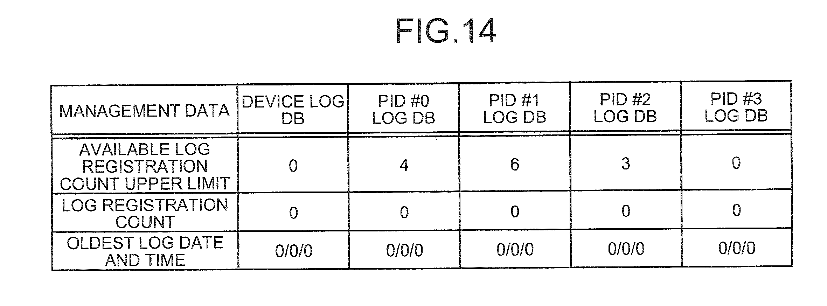

Consequently, as illustrated in FIG. 14, the upper-limit-value calculating unit 30 stores, in the log management information DB 23, the "available log registration count upper limit of 4" for the PID #0 log DB 22a and the "available log registration count upper limit of 6" for the PID #1 log DB 22b. Furthermore, as illustrated in FIG. 14, the upper-limit-value calculating unit 30 stores, in the log management information DB 23, the "available log registration count upper limit of 3" for the PID #2 log DB 22c. FIG. 14 is a schematic diagram illustrating an example of an available log registration count upper limit calculated on the basis of the number of parts constituting the PID.

[d] Fourth Embodiment

The disclosed information processing device may also calculate an "available log registration count upper limit" on the basis of the score that is previously determined in accordance with, for example, the type of hardware (component) constituting a PID. Specifically, by calculating a total score of PIDs from the hardware constituting each PID and substituting the total score into Equation (4), an "available log registration count upper limit" for each PID can be calculated.

$$\text{available log registration count upper limit} = \text{entire log area entry count} \times \frac{\text{target partition score}}{\text{total score of all partitions}}$$

$$(4)$$

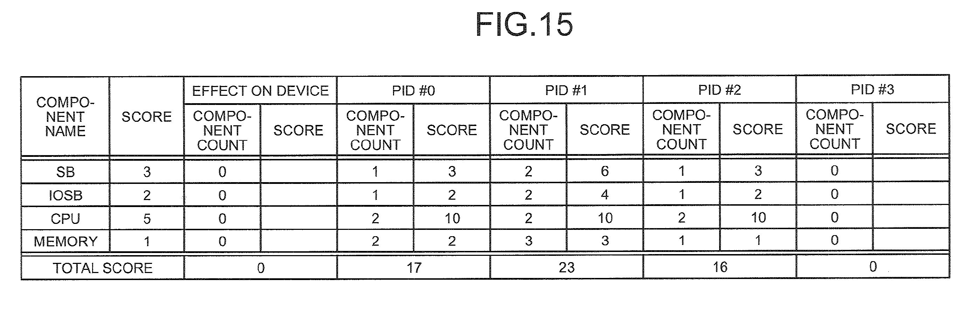

In the following, a description will be given of a case in which an "available log registration count upper limit" is calculated for each PID if each PID has the hardware configuration illustrated in FIG. 15 and if a score is assigned to each piece of the hardware. FIG. 15 is a schematic diagram illustrating the hardware configuration of the PID and the score of the hardware. As illustrated in FIG. 15, a score of 3 is set to the SB, a score of 2 is set to the IOSB, a score of 5 is set to the CPU, and a score of 1 is set to the memory. These scores can be arbitrarily changed by, for example, an administrator.

Furthermore, no hardware that affects a device is present and the total score thereof is zero. The PID #0 is constituted by one SB, one IOSB, two CPUs, and two memories. In other words, the total score of the PID #0 is 17, where the total score of the SB is 3, the total score of the IOSB is 2, the total score of the CPUs is 10, and the total score of the memory is 2. The PID #1 is constituted by two SBs, two IOSBs, two CPUs, and three memories. In other words, the total score of the PID #1 is 23, where the total score of the SBs is 6, the total score of the IOSBs is 4, the total score of the CPUs is 10, and the total score of the memories is 3. Furthermore, the PID #2 is constituted by one SB, one IOSB, two CPUs, and one memory. In other words, the total score of the PID #2 is 16, where the total score of the SB is 3, the total score of the IOSB is 2, the total score of the CPUs is 10, and the total score of the memory is 1. The PID #3 has no SB, no IOSB, no CPU, and no memory, i.e., the PID #3 has not been configured. Furthermore, 15 entries can be registered in the maximum log area.

In this state, the upper-limit-value calculating unit 30 calculates an "available log registration count upper limit as 0" for the device log DB. Furthermore, for the PID #0 log DB 22a, the upper-limit-value calculating unit 30 calculates, i.e., by using Equation (4), the "available log registration count upper limit" as "4.55" by dividing the product of the "entire log area entry count (15)" and the "score of the PID #0 (17)" by the "total score of all PIDs (56)".

Furthermore, for the PID #1 log DB 22b, the upper-limit-value calculating unit 30 calculates, i.e., by using Equation (4), the "available log registration count upper limit" as "6.16" by dividing the product of the "entire log area entry count (15)" and the "score of the PID #1 (23)" by the "total score of all PIDs (56)". Furthermore, for the PID #2 log DB 22c, the upper-limit-value calculating unit 30 calculates, i.e., by using Equation (4), the "available log registration count upper limit" as "4.29" by dividing the product of the "entire log area entry count (15)" and the "score of the PID #2 (16)" by the "total score of all PIDs (56)".

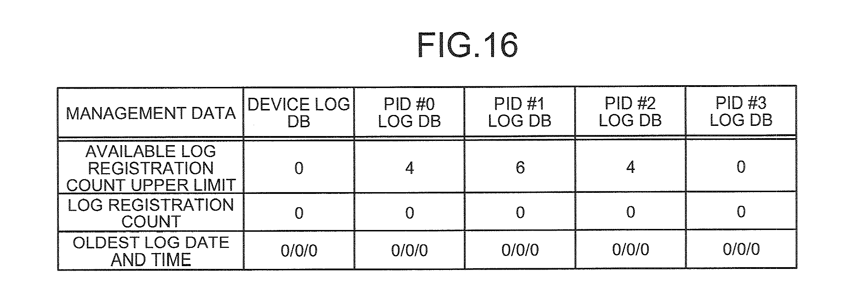

Consequently, as illustrated in FIG. 16, the upper-limit-value calculating unit 30 stores, in the log management information DB 23, the "available log registration count upper limit of 4" for the PID #0 log DB 22a, and the "available log registration count upper limit of 6" for the PID #1 log DB 22b. Furthermore, as illustrated in FIG. 16, the upper-limit-value calculating unit 30 stores, in the log management information DB 23, the "available log registration count upper limit of 4" for the PID #2 log DB 22c. FIG. 16 is a schematic diagram illustrating an example of the available log registration count upper limit that is calculated after the PID is converted to a score.

[e] Fifth Embodiment

A log area associated with a PID that has been deleted due to a configuration change is gradually moved when a log is registered in another PID; therefore, the log area may sometimes have already been deleted when the log of the PID, which is deleted after the configuration change, is desired to be checked. Accordingly, it is also possible to arrange "the minimum log reservation count" that corresponds to the minimum number of logs reserved in the log area associated with the deleted PID. Furthermore, "the minimum log reservation count" may also be arbitrarily changed by an administrator.

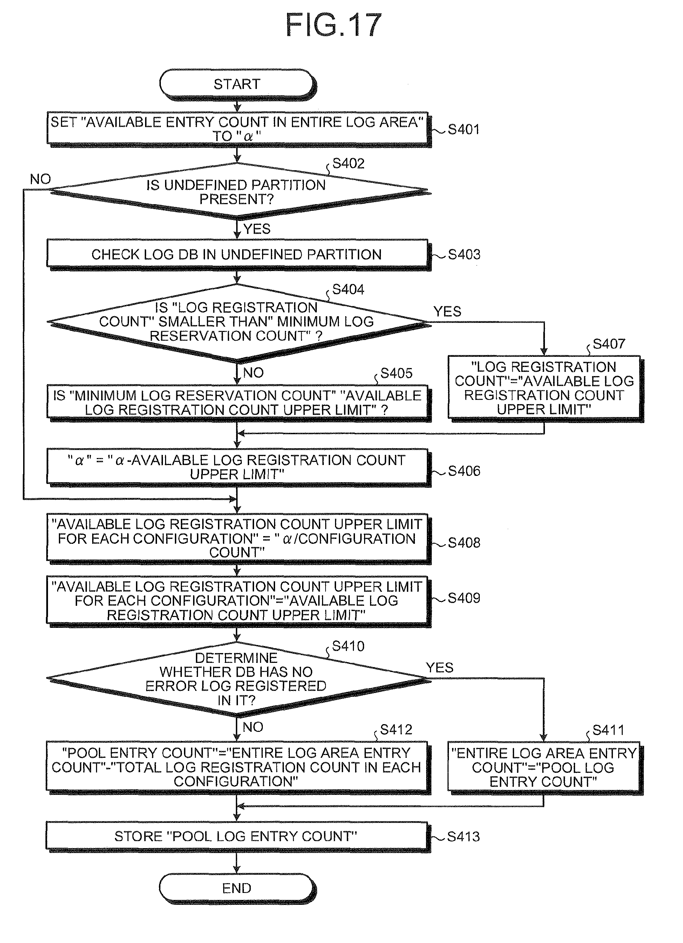

FIG. 17 is a flowchart illustrating the determining of an available log registration count upper limit when the minimum log reservation count is set. As illustrated in FIG. 17, first, the upper-limit-value calculating unit 30 sets the "available entry count in the entire log area" to "$\alpha$" (Step S401). Then, the upper-limit-value calculating unit 30 refers to the log area 22 or the information processing device 10 and determines whether an undefined partition is present (Step S402). Specifically, the upper-limit-value calculating unit 30 determines whether a deleted PID is present.

If an undefined partition is present (Yes at Step S402), the upper-limit-value calculating unit 30 refers to the log management information DB 23 and checks the information on the log DB stored in the undefined partition log DB (Step S403). Then, the upper-limit-value calculating unit 30 determines whether the "log registration count" in the log management information DB 23 is smaller than "the minimum log reservation count" that is previously set (Step S404). In contrast, if an undefined partition is not present (No Step S402), the upper-limit-value calculating unit 30 executes the process at Step S408.

If the "log registration count" of the undefined partition is greater than "the minimum log reservation count" (No at Step S404), the upper-limit-value calculating unit 30 uses the "the minimum log reservation count", which is set in the undefined partition, as the "available log registration count upper limit" (Step S405). Then, the upper-limit-value calculating unit 30 calculates a "$\alpha$-available log registration count upper limit" as a new "$\alpha$" (Step S406).

In contrast, if the "log registration count" of the undefined partition is smaller than "the minimum log reservation count" (Yes at Step S404), the upper-limit-value calculating unit 30 uses the "log registration count", which is currently registered in the undefined partition, as the "available log registration count upper limit" (Step S407). Then, the upper-limit-value calculating unit 30 executes the process at Step S406. Furthermore, the upper-limit-value calculating unit 30 executes the processes at Steps S403 to S406 by the processes corresponding to the number of undefined partitions.

Thereafter, the upper-limit-value calculating unit 30 calculates an "available log registration count upper limit for each configuration" as "$\alpha$/configuration count" (Step S408). Specifically, at Step S408, the upper-limit-value calculating unit 30 calculates an "available log registration count upper limit for eachPID" on the basis of the currently available entry count ($\alpha$) and the currently operating PID count.

Subsequently, the upper-limit-value calculating unit 30 defines the calculated "available log registration count upper limit for each configuration" as the "available log registration count upper limit" for each PID and stores it as new data in the log management information DB 23 (Step S409).

Then, the upper-limit-value calculating unit 30 refers to the log management information DB 23 and determines whether the DB has no error log registered in it, i.e., the "log registration count" in the entire log DB is "0" (Step S410). Specifically, the upper-limit-value calculating unit 30 refers to the log management information DB 23 and determines whether any log DB containing a "log registration count" of "1 or more" is present.

If no error log is registered in the entire log DB (Yes Step S410), the upper-limit-value calculating unit 30 determines that the "entire log area entry count" is a "pool log entry count" (Step S411). Specifically, the upper-limit-value calculating unit 30 determines that the entry count corresponding to "$\alpha$" calculated at Step S406 is in an unused state and thus determines that "pool log entry count" is "$\alpha$".

In contrast, if an error log is registered in one of the log DBs (No at Step S410), the upper-limit-value calculating unit 30 executes the process at Step S412. Specifically, the upper-limit-value calculating unit 30 determines that a value obtained by subtracting the "total log registration count in each configuration", which indicates an already registered log count, from the "entire log area entry count" is the "pool log entry count". More specifically, if the total log registration count is 3, the upper-limit-value calculating unit 30 determines that the entry count, which is obtained by subtracting 3 from "$\alpha$" that is calculated at Step S406, is in an unused state and determines that "$\alpha$-3" is the "pool entry count".

Then, the upper-limit-value calculating unit 30 stores in the pool management information DB 24, the "pool log entry count" determined at Step S411 or Step S412 (Step S413).

According to the fifth embodiment, if "the minimum log reservation count" that is set in the deleted partition log DB is smaller than the "log registration count", the "available log registration count upper limit" in the deleted partition log DB is used as "the minimum log reservation count". For example, if "the minimum log reservation count" for the deleted partition is "3" and if the "log registration count" is "5", it is determined that "3" is the new "available log registration count upper limit".

Furthermore, if "the minimum log reservation count" that is set for the deleted partition log DB is greater than the "log registration count", the "log registration count" that is currently registered in the deleted partition log DB is used as the "available log registration count upper limit". For example, if "the minimum log reservation count" for the deleted partition is "3", if the "available log registration count upper limit" is "2", and if the error log of "1" has already been registered, it is determined that "1" is the new "available log registration count upper limit".

As described above, for the deleted partition log, the minimum number of logs can be stored as a log without being released; therefore, it is possible to prevent a state in which a log has already disappeared when there is a desire to check the log in a PID that was deleted after a configuration change. Furthermore, an important log can also be stored in a deleted partition for an arbitrary time period.

[f] Sixth Embodiment

In the above explanation, a description has been given of the embodiments of the information processing device disclosed in the present invention; however, the embodiments are not limited thereto and can be implemented with various kinds of embodiments other than the embodiments described above. Therefore, another embodiment will be described below.

(Calculation example of an available log registration count upper limit)

For example, in order to prevent a calculated value from being less than 1 when the information processing device 10 calculates an "available log registration count upper limit" by using a component count or a score, an "available log registration count upper limit" may also be calculated by using a component count or a score after "the minimum available log registration count" is previously set. In the following, a calculation example will be described by using a case of calculating the "available log registration count upper limit" in the PID #0 illustrated in FIG. 15 after "the minimum available log registration count" is defined as "1". The information processing device 10 substitutes, into Equation (5), "1" for "the minimum available log registration count", "15" for the "entire log area entry count", "3" for the available partition count, "17" for the score of the target partition, and "56" for the total score of all partitions.

$$\text{available log registration count upper limit} = \text{minimum available log registration count}$$
$$+ (\text{entire log area entry count} - \text{minimum available log registration count} \times \text{available partition count})$$
$$\times \frac{\text{target partition score}}{\text{total score of all partitions}}$$

$$(5)$$

Specifically, the information processing device 10 calculates the "available log registration count upper limit" using an equation given as "1+(15-1x3)x17/56=3.94...". Accordingly, the information processing device 10 can calculate the "available log registration count upper limit" in the PID #0 as "3". Furthermore, a component count may also be used in Equation (5) instead of a score.

Furthermore, for another method, the information processing device 10 may also collect statistics on log occurrence frequency for each configuration, in which a log is managed, and then may allocate a greater value, for the upper limit value, to the configuration, in which log occurrence frequency is high, when an "available log registration count upper limit" is determined. Furthermore, the information processing device 10 can collect statistics on the occurrence frequency for each degree of importance and use the statistical results for the "available log registration count upper limit", thereby it is possible to collect logs having the configuration in which an important log is likely to occur. A change in the "available log registration count upper limit" may be periodically and automatically performed, or alternatively, may also be performed when the configuration is changed.

Furthermore, in the first to the fifth embodiments, a description has been given of a case in which a log area is arranged for each PID; however, the embodiments are not limited thereto. For example, if sufficient resources are provided, log areas may also be managed in component (hardware) units. In such a case, the process performed for each PID described above is performed by substituting each PID for each component.

(Validity period of a log)

If a state continues in which the partition deleted in the fifth embodiment is undefined, the log area in the partition is still in a used state, and thus, the resources may sometimes not be efficiently used. Accordingly, it may also be possible to set a validity period with respect to an undefined partition log and to allocate, to a "pool", a log entry that stores therein a log whose validity period is expired. At the time of allocation, the entry count allocated to the "pool area" is subtracted from the "available log registration count upper limit" and the "log registration count". Furthermore, the "entry count" allocated to the pool is added to the "pool log entry count".

Furthermore, the validity period may also be periodically checked or may also be checked when a log is registered. If the validity period is checked when an error log is registered, an error log may also be registered by using the "entry" without processing anything that stores therein the log whose validity period is expired. If the "entry" that stores therein an expired error log is used as a pool, the total count of the "available log registration count upper limit" in the entire device decreases; therefore, the "available log registration count upper limit" in all partitions may also be updated. Furthermore, for error logs in the existing partitions, by performing the process described above, it is possible to delete a log obtained after a long time period has elapsed.

(Handling of a log)

For example, when a failed component is replaced, an error log of the replacement component may also be deleted at the time of replacement. Furthermore, when a failed component is replaced, a validity period is provided to a log of the component that has not been replaced and then the log is deleted after the replacement when the validity period has elapsed.

(Leveling method)

As a method for moving a log area between partitions, it may also possible to use a method for moving a log area on the basis of a score, which is obtained by allocating an importance to the content of a log and scoring the log in accordance with the importance and the time period that has elapsed since the occurrence date and time of the log. In such a case, a high score is given to an error log whose importance is high and the time period that has elapsed since the occurrence date and time of the error log is short, whereas, a low score is given to an error log whose importance is low and the time period that has elapsed since the occurrence date and time of the error log is long. When a log is moved into an area from a log area that has another configuration, a priority is given to an area in which an error log having a low score is registered, thus preventing an important log from being deleted.

## EP 2 610 751 A1

(System)

The components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. Furthermore, all or any part of the processing functions performed by each device can be implemented by a CPU and by programs analyzed and executed by the CPU or implemented as hardware by wired logic.

Explanation of Reference

| | |
|---|---|
| 10 | information processing device |
| 11 | communication control I/F unit |
| 12, 14, 16, 18 | SB |
| 12a, 14a, 16a, 18a | CPU |
| 12b, 14b, 16b, 18b | memory |
| 13, 15, 17, 19 | IOSB |
| 20 | system control unit |
| 21 | storage area |
| 22 | log area |
| 22a | PID #0 log DB |
| 22b | PID #1 log DB |
| 22c | PID #2 log DB |
| 22d | pool area |
| 22e | PID #3 log DB |
| 23 | log management information DB |
| 24 | pool management information DB |
| 25 | error detecting unit |
| 26 | configuration management unit |
| 27 | first error storing unit |
| 28 | second error storing unit |
| 29 | log area control unit |
| 30 | upper-limit-value calculating unit |

### Claims

1. A system control device comprising:

   an error log storing unit that stores, in log areas associated with a plurality of partitions obtained by allocating hardware that is divided into pieces in which an information processing function is exhibited, a log of an error that has occurred in any of the plurality of partitions;
   an upper limit count storing unit that stores therein an upper limit count of logs in each of the log areas associated with the plurality of partitions;
   a first storing unit that allocates an unused area to a log area associated with a partition in which the error has occurred ,when the error has occurred in one of the plurality of partitions and the unused area is present in the error log storing unit, and stores the log of the error in an allocated unused area; and
   a second storing unit that allocates an oldest entry in the log area that stores therein error logs the number of which is equal to or greater than the upper limit count that is stored in the upper limit count storing unit to a log area associated with the partition in which the error has occurred, when the error has occurred in one of the plurality of partitions, when an unused area is not present in the error log storing unit, and when a registration count, which is registered in a log area associated with the partition in which the error has occurred, exceeds the upper limit count, and stores the log of the error in an allocated oldest entry.

2. The system control device according to claim 1, further comprising:

a log area creating unit that creates, in the error log storing unit when a new partition is created, a log area that is associated with the new partition; and

an upper limit count calculating unit that calculates the upper limit count with respect to each of the plurality of partitions including the new partition on the basis of a predetermined condition, when the new log area is created by the log area creating unit, and that stores the calculation result in the upper limit count storing unit.

3. The system control device according to claim 1, further comprising:

a log area deleting unit that releases, as an unused area when an existing partition is deleted, a log area that is associated with the deleted partition stored in the error log storing unit; and

an upper limit count calculating unit that calculates the upper limit count with respect to each of the plurality of partitions excluding the deleted partition on the basis of a predetermined condition using the released unused area, when an available area is released by the log area deleting unit, and that stores the calculation result in the upper limit count storing unit.

4. The system control device according to claim 3, wherein
when an existing partition is deleted, the log area deleting unit releases, as unused areas from among log areas of the deleted partition, remaining entries while leaving a predetermined number of entries, and
the upper limit count calculating unit calculates the upper limit count with respect to each of the plurality of partitions excluding the deleted partition on the basis of the predetermined condition using the released unused area released by the log area deleting unit, and stores the calculation result in the upper limit count storing unit.

5. The system control device according to claim 3, wherein the second storing unit allocates, to the log area associated with the partition in which the error has occurred, whichever entry is older of the oldest entry that is in the log area that stores therein the error logs the number of which is equal to or greater than the upper limit count stored in the upper limit count storing unit or the oldest entry that is in the log area of the deleted partition and stores the log of the error that has occurred in an allocated oldest entry.

6. The system control device according to claim 2 or 3, wherein the upper limit count calculating unit stores, in the upper limit count storing unit as the upper limit count of logs in each of the log areas associated with the plurality of partitions, a value obtained by dividing an entry count of error logs that is allowed to be stored in the entire error log storing unit by an existing-partition count.

7. The system control device according to claim 2 or 3, wherein, for each of the plurality of partitions, the upper limit count calculating unit stores, in the upper limit count storing unit as the upper limit count, a value obtained by dividing a hardware count of hardware allocated to the plurality of partitions by a hardware count of hardware of all the partitions and multiplying the obtained division value by an entry count of error logs that is allowed to be stored in the entire error log storing unit.

8. The system control device according to claim 2 or 3, wherein the upper limit count calculating unit previously sets a score that indicates the importance of hardware allocated to each of the plurality of partitions, calculates, for each of the plurality of partitions, a total score from hardware that is currently allocated, and stores the upper limit count calculated on the basis of the total score in the upper limit count storing unit.

9. The system control device according to claim 1, wherein the error log storing unit stores, in the log areas associated with each piece of hardware allocated to each of the plurality of partitions, the log of the error that has occurred in any of the plurality of pieces of the hardware.

10. A log control method comprising:

allocating, when the error has occurred in one of a plurality of partitions and an unused area is present in an error log storing unit that stores, in log areas associated with the plurality of partitions obtained by allocating hardware that is divided into pieces in which an information processing function is exhibited, the unused area to a log area associated with a partition in which the error has occurred, and storing the log of the error in an allocated unused area; and

allocating, when the error has occurred in one of the plurality of partitions, when an unused area is not present in the error log storing unit, and when a registration count, which is registered in the log area associated with the partition in which the error has occurred, exceeds an upper limit count of logs in the log area, an oldest entry in a log area that stores therein error logs the number of which is equal to or greater than the upper limit count that is stored in an upper limit count storing unit to a log area associated with the partition in which the error has occurred, and storing the log of the error in an allocated oldest entry.

**11.** An information processing device comprising:

an error log storing unit that stores, in log areas associated with a plurality of partitions obtained by allocating hardware that is divided into pieces in which an information processing function is exhibited, a log of an error that has occurred in any of the plurality of partitions;

an upper limit count storing unit that stores therein an upper limit count of logs in each of the log areas associated with the plurality of partitions;

a first storing unit that allocates an unused area to a log area associated with a partition in which the error has occurred ,when the error has occurred in one of the plurality of partitions and the unused area is present in the error log storing unit, and stores the log of the error in an allocated unused area; and

a second storing unit that allocates an oldest entry in the log area that stores therein error logs the number of which is equal to or greater than the upper limit count that is stored in the upper limit count storing unit to a log area associated with the partition in which the error has occurred, when the error has occurred in one of the plurality of partitions, when an unused area is not present in the error log storing unit, and when a registration count, which is registered in a log area associated with the partition in which the error has occurred, exceeds the upper limit count, and stores the log of the error in an allocated oldest entry.

# FIG.1

INFORMATION PROCESSING DEVICE  10

COMMUNICATION CONTROL I/F UNIT  11

**PID #0**
- SB  12
  - CPU  12a
  - MEMORY  12b
- IOSB  13

**PID #1**
- SB  14
  - CPU  14a
  - MEMORY  14b
- IOSB  15

- SB  16
  - CPU  16a
  - MEMORY  16b
- IOSB  17

**PID #2**
- SB  18
  - CPU  18a
  - MEMORY  18b
- IOSB  19

SYSTEM CONTROL UNIT  20

EP 2 610 751 A1

# FIG.2

EP 2 610 751 A1

# FIG.3

| MANAGEMENT DATA | PID #0 LOG DB | PID #1 LOG DB | PID #2 LOG DB | PID #3 LOG DB |
|---|---|---|---|---|
| AVAILABLE LOG REGISTRATION COUNT UPPER LIMIT | 5 | 5 | 5 | 0 |
| LOG REGISTRATION COUNT | 4 | 3 | 2 | 0 |
| OLDEST LOG DATE AND TIME | 2009/2/3 | 2009/8/8 | 2010/5/1 | 0/0/0 |

# FIG.4

| MANAGEMENT DATA | CONTENT |
|---|---|
| POOL LOG ENTRY COUNT | 6 |

# FIG.5

EP 2 610 751 A1

FIG.6

# FIG.7

| 22a | 22b | 22c | 22e NEW | 22d |
|---|---|---|---|---|
| PID #0 LOG DB | PID #1 LOG DB | PID #2 LOG DB | PID #3 LOG DB | POOL AREA |

OLD

NEW

AVAILABLE LOG REGISTRATION COUNT UPPER LIMIT

2005/05/05

NO ENTRIES

EP 2 610 751 A1

# FIG.8

PID #0
LOG DB
22a

PID #1
LOG DB
22b   DELETE

PID #2
LOG DB
22c

PID #3
LOG DB
22e

POOL
AREA
22d

2005/05/05

2005/05/11

2005/05/07

2005/05/12

NO ENTRIES

OLD

AVAILABLE LOG
REGISTRATION
COUNT UPPER LIMIT

NEW

EP 2 610 751 A1

# FIG.9

```
        ┌──────────────┐
        │    START     │
        └──────┬───────┘
               │
               ▼                          S101
          ◇ HAS ERROR BEEN ◇ ──NO──┐
            OCCURRED?               │
               │                    │
              YES                   │
               │                    │
               ▼           S102     │
          ◇ IS ENTRY ◇ ──NO──┐      │
         PRESENT IN POOL      │      │
             AREA?            │      │
               │             ▼       │
              YES      ◇ IS LOG ◇ S104│
               │        REGISTRATION  │
               ▼        COUNT IN TARGET│
         ┌──────────┐   LOG DB EQUAL TO──NO──┐
         │  POOL    │S103 OR GREATER THAN     │
         │USAGE REGI│    UPPER LIMIT          │
         │STRATION  │    VALUE?               │
         │ PROCESS  │      │                  │
         └────┬─────┘     YES    S105         │S106
              │            │                  │
              │            ▼                  ▼
              │    ┌───────────────┐   ┌──────────┐
              │    │REGISTER USING │   │ LEVELING │
              │    │ WRAP PROCESS  │   │ PROCESS  │
              │    └───────┬───────┘   └────┬─────┘
              │            │                │
              ▼            ▼                │
         ┌──────────┐◄──────────────────────┘
         │   END    │
         └──────────┘
```

# FIG.10

```
        ┌─────────────┐
        │    START    │
        │ (POOL USAGE │
        │  PROCESS)   │
        └──────┬──────┘
               │
               ▼
  ┌────────────────────────────┐
  │ SUBTRACT ENTRY COUNT IN POOL│ ~S201
  │           AREA              │
  └────────────┬───────────────┘
               │
               ▼
  ┌────────────────────────────┐
  │  ALLOCATE ENTRY, FROM POOL  │ ~S202
  │  AREA, TO LOG REGISTRATION  │
  │         TARGET DB           │
  └────────────┬───────────────┘
               │
               ▼
  ┌────────────────────────────┐
  │  INCREASE LOG REGISTRATION  │ ~S203
  │  COUNT IN LOG REGISTRATION  │
  │         TARGET DB           │
  └────────────┬───────────────┘
               │
               ▼
  ┌────────────────────────────┐
  │ REGISTER ERROR LOG IN NEWLY │ ~S204
  │      ALLOCATED ENTRY        │
  └────────────┬───────────────┘
               │          ⟨S205
               ▼
  NO    ◇─────────────────────◇
  ◄─────│   IS REGISTRATION    │
        │      COUNT 1?        │
        ◇─────────────────────◇
               │ YES
               ▼
  ┌────────────────────────────┐
  │ REGISTER OLDEST DATE AND TIME│ ~S206
  └────────────┬───────────────┘
               │
               ▼
        ┌─────────────┐
        │     END     │
        │ (POOL USAGE │
        │  PROCESS)   │
        └─────────────┘
```

# FIG.11

START (LEVELING PROCESS)

SEARCH FOR OLDEST LOG DB CONTAINING "OLDEST LOG DATE AND TIME" FROM AMONG LOG DBs THAT ARE NOT TO BE REGISTERED — S301

DOES "LOG REGISTRATION COUNT" IN SEARCHED-FOR LOG DB EXCEED "AVAILABLE LOG REGISTRATION COUNT UPPER LIMIT" ? — S302

NO →

YES ↓

DETERMINE THAT MATCHED LOG DB IS DB IN WHICH ENTRY IS TO BE DELETED — S303

ALLOCATE OLDEST ENTRY IN LOG DB IN WHICH ENTRY IS TO BE DELETED TO LOG DB THAT IS USED TO REGISTER ERROR LOG — S304

SEARCH FOR OLD DB CONTAINING SECOND "OLDEST LOG DATE AND TIME" FROM AMONG LOG DBS IN EACH OF WHICH LOG IS NOT TO BE REGISTERED — S309

UPDATE "OLDEST LOG DATE AND TIME" IN LOG DB IN WHICH ENTRY IS TO BE DELETED TO SECOND OLDEST DATE AND TIME — S305

SUBTRACT ALLOCATED ENTRY COUNT FROM "LOG REGISTRATION COUNT" IN LOG DB IN WHICH IT IS DETERMINED THAT ENTRY IS TO BE DELETED — S306

ADD ALLOCATED ENTRY COUNT TO "LOG REGISTRATION COUNT" IN LOG DB IN WHICH IT IS DETERMINED THAT ENTRY IS TO BE REGISTERED — S307

REGISTER LOG IN ENTRY THAT IS ALLOCATED TO LOG DB IN WHICH LOG IS TO BE REGISTERED — S308

IS "LOG REGISTRATION COUNT" IN REGISTRATION TARGET LOG DB "1"? — S310

NO

YES ↓

REGISTER "OLDEST LOG DATE AND TIME" IN REGISTRATION TARGET LOG DB — S311

END (LEVELING PROCESS)

# FIG.12

(a)

| MANAGEMENT DATA | DEVICE LOG DB | PID #0 LOG DB | PID #1 LOG DB | PID #2 LOG DB | PID #3 LOG DB |
|---|---|---|---|---|---|
| AVAILABLE LOG REGISTRATION COUNT UPPER LIMIT | 5 | 5 | 5 | 0 | 0 |
| LOG REGISTRATION COUNT | 2 | 4 | 3 | 0 | 0 |
| OLDEST LOG DATE AND TIME | 2009/7/8 | 2009/2/3 | 2009/8/8 | 0/0/0 | 0/0/0 |

(b)

| MANAGEMENT DATA | DEVICE LOG DB | PID #0 LOG DB | PID #1 LOG DB | PID #2 LOG DB | PID #3 LOG DB |
|---|---|---|---|---|---|
| AVAILABLE LOG REGISTRATION COUNT UPPER LIMIT | 3 | 3 | 3 | 3 | 0 |
| LOG REGISTRATION COUNT | 2 | 4 | 3 | 0 | 0 |
| OLDEST LOG DATE AND TIME | 2009/7/8 | 2009/2/3 | 2009/8/8 | 0/0/0 | 0/0/0 |

EP 2 610 751 A1

# FIG.13

| COMPONENT NAME | EFFECT ON DEVICE | PID #0 | PID #1 | PID #2 | PID #3 |
|:---:|:---:|:---:|:---:|:---:|:---:|
| SB | 0 | 1 | 2 | 1 | 0 |
| IOSB | 0 | 1 | 2 | 1 | 0 |
| CPU | 0 | 2 | 2 | 2 | 0 |
| MEMORY | 0 | 2 | 3 | 1 | 0 |
| TOTAL | 0 | 6 | 9 | 5 | 0 |

## FIG.14

| MANAGEMENT DATA | DEVICE LOG DB | PID #0 LOG DB | PID #1 LOG DB | PID #2 LOG DB | PID #3 LOG DB |
|---|---|---|---|---|---|
| AVAILABLE LOG REGISTRATION COUNT UPPER LIMIT | 0 | 4 | 6 | 3 | 0 |
| LOG REGISTRATION COUNT | 0 | 0 | 0 | 0 | 0 |
| OLDEST LOG DATE AND TIME | 0/0/0 | 0/0/0 | 0/0/0 | 0/0/0 | 0/0/0 |

# FIG.15

EP 2 610 751 A1

| COMPO-NENT NAME | SCORE | EFFECT ON DEVICE | | PID #0 | | PID #1 | | PID #2 | | PID #3 | |
|---|---|---|---|---|---|---|---|---|---|---|---|
| | | COMPO-NENT COUNT | SCORE | COMPO-NENT COUNT | SCORE | COMPO-NENT COUNT | SCORE | COMPO-NENT COUNT | SCORE | COMPO-NENT COUNT | SCORE |
| SB | 3 | 0 | | 1 | 3 | 2 | 6 | 1 | 3 | 0 | |
| IOSB | 2 | 0 | | 1 | 2 | 2 | 4 | 1 | 2 | 0 | |
| CPU | 5 | 0 | | 2 | 10 | 2 | 10 | 2 | 10 | 0 | |
| MEMORY | 1 | 0 | | 2 | 2 | 3 | 3 | 1 | 1 | 0 | |
| TOTAL SCORE | | 0 | | 17 | | 23 | | 16 | | 0 | |

## FIG.16

| MANAGEMENT DATA | DEVICE LOG DB | PID #0 LOG DB | PID #1 LOG DB | PID #2 LOG DB | PID #3 LOG DB |
|---|---|---|---|---|---|
| AVAILABLE LOG REGISTRATION COUNT UPPER LIMIT | 0 | 4 | 6 | 4 | 0 |
| LOG REGISTRATION COUNT | 0 | 0 | 0 | 0 | 0 |
| OLDEST LOG DATE AND TIME | 0/0/0 | 0/0/0 | 0/0/0 | 0/0/0 | 0/0/0 |

EP 2 610 751 A1

# FIG.17

START

SET "AVAILABLE ENTRY COUNT IN ENTIRE LOG AREA" TO "$\alpha$" — S401

S402
IS UNDEFINED PARTITION PRESENT?

NO

YES

CHECK LOG DB IN UNDEFINED PARTITION — S403

S404
IS "LOG REGISTRATION COUNT" SMALLER THAN" MINIMUM LOG RESERVATION COUNT" ?

YES

S407
"LOG REGISTRATION COUNT"="AVAILABLE LOG REGISTRATION COUNT UPPER LIMIT"

NO

IS "MINIMUM LOG RESERVATION COUNT" "AVAILABLE LOG REGISTRATION COUNT UPPER LIMIT" ? — S405

"$\alpha$" = "$\alpha$-AVAILABLE LOG REGISTRATION COUNT UPPER LIMIT" — S406

"AVAILABLE LOG REGISTRATION COUNT UPPER LIMIT FOR EACH CONFIGURATION" = "$\alpha$/CONFIGURATION COUNT" — S408

"AVAILABLE LOG REGISTRATION COUNT UPPER LIMIT FOR EACH CONFIGURATION"="AVAILABLE LOG REGISTRATION COUNT UPPER LIMIT" — S409

S410
DETERMINE WHETHER DB HAS NO ERROR LOG REGISTERED IN IT?

YES

S411
"ENTIRE LOG AREA ENTRY COUNT"="POOL LOG ENTRY COUNT"

NO

S412
"POOL ENTRY COUNT"="ENTIRE LOG AREA ENTRY COUNT"-"TOTAL LOG REGISTRATION COUNT IN EACH CONFIGURATION"

STORE "POOL LOG ENTRY COUNT" — S413

END

32

## INTERNATIONAL SEARCH REPORT

| | International application No. |
|---|---|
| | PCT/JP2010/064289 |

**A. CLASSIFICATION OF SUBJECT MATTER**
*G06F11/30*(2006.01)i, *G06F11/34*(2006.01)i

According to International Patent Classification (IPC) or to both national classification and IPC

**B. FIELDS SEARCHED**

Minimum documentation searched (classification system followed by classification symbols)
G06F11/30, G06F11/34

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-339561 A  (International Business Machines Corp.), 08 December 2005 (08.12.2005), entire text; all drawings & US 2005/0278574 A1 | 1-11 |
| A | JP 2008-225599 A  (Seiko Epson Corp.), 25 September 2008 (25.09.2008), entire text; all drawings (Family: none) | 1-11 |

☐ Further documents are listed in the continuation of Box C.       ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 November, 2010 (02.11.10) | 16 November, 2010 (16.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4257035 A

- JP 10011330 A